# EUROPÄISCHE PATENTANMELDUNG

(11) **EP 3 893 106 A1**
(43) Veröffentlichungstag der Anmeldung: **13.10.2021**
(21) Anmeldenummer: 20168994.0
(22) Anmeldetag: 09.04.2020
(51) Int. Cl.: G06F 8/36, G05B 19/418

(54) **LAUFZEITUMGEBUNG ZUR AUSFÜHRUNG WENIGSTENS EINER ANLAGENTECHNISCHEN APPLIKATION UND KOPPLUNG MINDESTENS EINER ANLAGENTECHNISCHEN KOMPONENTE**

(71) Anmelder: Siemens Aktiengesellschaft, 80333 München (DE)
(72) Erfinder: Calà, Ambra, 80639 München (DE); Fries, Edgar, 91077 Neunkirchen am Brand (DE); Reichmann, Jürgen, 81825 München (DE)

(57) **Zusammenfassung**

Die Erfindung betrifft eine Laufzeitumgebung zur Ausführung wenigstens einer anlagentechnischen Applikation und Kopplung mindestens einer anlagentechnischen Komponente in einem die Laufzeitumgebung umfassenden Automatisierungssystem,
welches eine erste Architekturebene (FD) ausgeprägt als Feld- und/oder Steuerungsumgebung aufweist, in der eine oder mehrere das Zusammenwirken der jeweils gekoppelten Komponenten zur Ausführung einer vorgegebenen oder vorgebbaren anlagentechnischen Aufgabe steuernde Applikationen (App 1.1 bis App 1.n) ablaufbar sind,
und welches zumindest eine zweite Architekturebene (E) ausgeprägt als Prozessleit- und/oder Kommunikationsnetzwerkumgebung aufweist, in der zur Ausführung von vorgegebenen und/oder vorgebbaren anlagentechnischen Prozesse benötigte Applikationen ablaufbar sind und Daten zwischen den Applikationen (App 2.1 bis App 2.n) und/oder zwischen einer Applikation und zumindest einer Kommunikationsnetzwerkschnittstelle austauschbar sind,
dadurch gekennzeichnet, dass die Laufzeitumgebung mehrere miteinander verbindbare und/oder verbundene Instanzen aufweist oder bilden kann, wobei
- eine solche erste Instanz (LI1) für die Feld- und/oder Steuerungsumgebung ausgebildet ist,
- und wobei eine solche zumindest zweite Instanz (LI2) für die Prozessleit- und/oder Kommunikationsnetzwerkumgebung des Automatisierungssystems ausgebildet ist,
- wobei die auf der ersten Instanz wenigstens eine ablaufbare Applikation mit der auf der zweiten Instanz wenigstens eine ablaufbare Applikation nahtlos miteinander kommunizieren und/oder Daten (D) nahtlos austauschen können.

## Beschreibung

Die Erfindung betrifft eine Laufzeitumgebung zur Ausführung wenigstens einer anlagentechnischen Applikation und Kopplung mindestens einer anlagentechnischen Komponente in einem die Laufzeitumgebung umfassenden Automatisierungssystem sowie ein zugehöriges Betriebsverfahren.

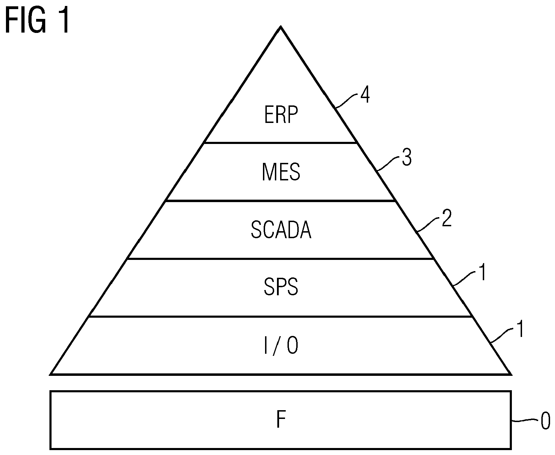

Moderne Automatisierungssysteme zeichnen sich durch zentralisierte und hierarchische Steuerungsarchitekturen aus, wie z. B. die Automatisierungspyramide gemäß den Standards ISA-95 und IEC 62264. Nach diesen Standards stellt die eigentliche konventionelle Architektur der Automatisierungspyramide eine klare Trennung von Systemen und Funktionalitäten in fünf Architekturebenen dar, die ihren eigenen spezifischen Automatisierungszweck haben und nur mit den angrenzenden Architekturebenen Informationen austauschen. In Figur 1 ist eine solche Automatisierungspyramide nach ISA-95 gezeigt. Dabei repräsentiert die mit 0 gekennzeichnete Architekturebene den Fertigungs- und Produktionsprozess F, welcher mittels Eingangs- und Ausgangssignale I/O einer Feldumgebung durch sogenannte SPS-Maschinen (SPS in Englisch: PLC: Programmable Logic Controller) auf einer Steuerungsumgebung gesteuert wird. Steuerungsebene bzw. -umgebung und Feldebene bzw. -umgebung bilden dabei die Architekturebene 1. Die Architekturebene 2 ist meist als Prozessleit- und/oder Kommunikationsnetzwerkumgebung ausgeprägt und wird oft mit dem Begriff SCADA (Supervisory Control and Data Acquisition) abgekürzt. Eine mit 3 gekennzeichnete Betriebsleitumgebung bzw. -ebene bildet die Architekturebene 3 und wird häufig mit dem Begriff MES (Manufacturing Execution System) abgekürzt. Eine mit 4 gekennzeichnete Unternehmensumgebung bzw. -ebene bildet die Architekturebene 4 und wird häufig mit dem Begriff ERP (Enterprise Ressource Planing) abgekürzt.

Diese hierarchische Automatisierungsstruktur unterstützt betriebliche Aufgaben auf verschiedenen Informationsebenen innerhalb eines Werks, wie z. B. Produktionsplanung und - terminierung, Erfassung und Verarbeitung von Produktionsdaten, Anlagen- und Materialflusssteuerung. Die architektonische Struktur wird als Pyramide bezeichnet, da sich die auf verschiedenen Ebenen befindlichen Systeme auf unterschiedliche Zeitbereiche beziehen. Die Zeiträume auf höherer Ebene reichen von Monaten bis Wochen, während die niedrigeren Ebenen von Tagen bis Sekunden und Millisekunden reichen. Es können drei generelle Architekturebenen unterschieden werden. Die höchste Architekturebene 4 der Pyramide repräsentiert die Geschäftsführung des Unternehmens, z. B. wirtschaftliche und logistische Aktivitäten wie Produktionsplanung und Betriebsführung. Die Architekturebene 3 umfasst die Koordination und Verwaltung der Produktionsausführung sowie die Integration der Systeme im Hinblick auf den Hauptdatenworkflow innerhalb einer Automatisierungsanlage. Die unteren Architekturebenen 2 bis 0 bestehen aus Modulen zur Steuerung von Produkt- und Prozesstechnologien, zur Überwachung des gesamten Produktionssystems sowie zur Messung und Anzeige von Gerätedaten mittels Aktoren und Sensoren. Der ISA-Standard formalisiert die Interaktionen dieser Hierarchieebenen, um eine automatisierte Kommunikation zwischen Unternehmensplanung und Fertigungssteuerungssystemen zu ermöglichen. Eine hierarchische Struktur weist eine hohe Robustheit auf und betont eine gute Vorhersagbarkeit und eine globale Systemoptimierung. Einerseits ist diese Struktur für kleine Systeme effektiv, die in sehr stabilen und strukturierten Umgebungen ausgeführt werden, in denen die Pyramide gemäß ISA-95 für eine einfache Entwicklung und Wartung genutzt werden kann. Der hierarchische Ansatz ist vorteilhaft, um eine Eins-zu-Eins-Zuordnung des logischen Controllers zur physischen Architektur zu ermöglichen, da die Größe, Funktionalität und Komplexität der einzelnen Controller-Module begrenzt ist. Andererseits schafft die hierarchische Struktur der Automatisierungsarchitektur eine Master-Slave-Beziehung zwischen verschiedenen Architekturebenen.

Diese Zuverlässigkeit zwischen den Architekturebenen führt zu unzureichender Anpassungsfähigkeit und Flexibilität bei Produktionsänderungen. Darüber hinaus kann ein einzelner Fehlerpunkt die Systemleistung drastisch reduzieren. Informationen werden auch inkonsistent und veraltet, sobald eine Kommunikationsverzögerung auftritt, die die teilweise und globale Entscheidungsfindung beeinträchtigt.

Die Systemarchitektur innerhalb der unterschiedlichen Architekturebenen der Automatisierungspyramide ist sehr inhomogen. Verschiedenste Arten von Hard- und Software kommen zum Einsatz. Daraus resultiert, dass auch die Kommunikation zwischen diesen Komponenten inhomogen ist. Während auf den unteren Architekturebenen in der Regel Kommunikationsprotokolle wie Profinet (Process Field Network) eingesetzt wird, ist auf den oberen Architekturebenen der Einsatz von OPC-UA (Open Platform Communications - Unified Architecture) gepaart mit TSN (Time Sensitive Network) möglich. Jedoch sind an den Grenzen der Architekturebenen immer Netzwerkschnittstellen - bzw. Gateways notwendig, um die uneinheitlichen Kommunikationsprotokolle zu übersetzen. Auch die Datenhaltung ist inhomogen. Die Art des Engineerings der einzelnen Komponenten unterscheidet sich ebenfalls stark.

Unter diesen Inhomogenitäten leiden auch die Wartbarkeit, Erweiterbarkeit und Aktualisierbarkeit. Unterschiedliche Expertisen werden benötigt, um das System zu erstellen und in Betrieb zu halten.

Infolge all dieser Einschränkungen kann eine solche hierarchische Struktur die dynamische adaptive Steuerung und die gemeinsame Nutzung von Ressourcen nicht ausreichend bewältigen.

Es ist Aufgabe der vorliegenden Erfindung, Verfahren und Systeme, Vor- bzw. Einrichtungen gegenüber dem oben genannten Stand der Technik insbesondere im Umfeld von Automatisierungssystem bzw. -anlagen zu verbessern.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Erfindung beansprucht eine Laufzeitumgebung zur Ausführung wenigstens einer anlagentechnischen Applikation und Kopplung mindestens einer anlagentechnischen Komponente in einem die Laufzeitumgebung umfassenden Automatisierungssystem,
welches eine erste Architekturebene ausgeprägt als Feld- und/oder Steuerungsumgebung aufweist, in der eine oder mehrere das Zusammenwirken der jeweils gekoppelten Komponenten zur Ausführung einer vorgegebenen oder vorgebbaren anlagentechnischen Aufgabe steuernde Applikationen ablaufbar sind, und welches zumindest eine zweite Architekturebene ausgeprägt als Prozessleit- und/oder Kommunikationsnetzwerkumgebung aufweist, in der zur Ausführung von vorgegebenen und/oder vorgebbaren anlagentechnischen Prozesse benötigte Applikationen ablaufbar sind und Daten zwischen den Applikationen und/oder zwischen einer Applikation und zumindest einer Kommunikationsnetzwerkschnittstelle austauschbar sind,
dadurch gekennzeichnet, dass die Laufzeitumgebung mehrere miteinander verbindbare und/oder verbundene Instanzen aufweist oder bilden kann, wobei
- eine solche erste Instanz für die Feld- und/oder Steuerungsumgebung ausgebildet ist,
- und wobei eine solche zumindest zweite Instanz für die Prozessleit- und/oder Kommunikationsnetzwerkumgebung des Automatisierungssystems ausgebildet ist,
- wobei die auf der ersten Instanz wenigstens eine ablaufbare Applikation mit der auf der zweiten Instanz wenigstens eine ablaufbare Applikation nahtlos miteinander kommunizieren und/oder Daten nahtlos austauschen können.
Das Automatisierungssystem bzw. -anlage umfasst hierbei zumindest ein Kommunikationsnetzwerk und die anlagentechnischen Komponenten wie etwa Fertigungsmaschinen, (IoT-)Geräte, Kommunikationsschnittstellen und ggf. Sensoren bzw. Aktoren. Die Kopplung von Komponenten kann hierbei ggf. physikalisch oder via ein Netzwerk oder Infrarot, Bluetooth, NFC, Zigbee synchron oder asynchron ausgebildet sein.

Eine Laufzeitumgebung (runtime environment - RTE) oder Ausführungseinrichtung oder als Ablaufumgebung verstanden werden, die dazu ggf. softwareprogrammtechnisch dazu eingerichtet ist, Applikationen in "ungewohnter" Umgebung lauffähig machen zu können, indem es zwischen der Applikation und Betriebssystem vermittelt. Die Laufzeitumgebung kann auch plattformunabhängig in Form einer Virtuellen Maschine ausgebildet sein. Eine Laufzeitumgebung stellt allgemeine Grundfunktionen für Speicher, Peripheriegeräte, Netzwerke oder andere Elemente bereit. Zu diesen Funktionen gehören unter anderem das Lesen und Schreiben von Dateien, der Datentransport über die Netzwerke, das Verwalten der Ein- und Ausgabegeräte, das Suchen oder Sortieren von Dateien und vieles mehr. Die Module der Laufzeitumgebungen sind in der Regel in Laufzeit-Bibliotheken abgespeichert. Häufig wird eine Java Runtime Environment (Java-Laufzeitumgebung) verwendet, die Java-Klassenbibliotheken vereinigt, die zum Beispiel für die Ein- und Ausgabe und die Java Virtual Machine verwendet werden. Die Java Virtual Machine ist für die Ausführung des Java-Bytecodes im Einsatz.

Der Datenaustausch kann auch nur einfache Nachrichten bzw. ggf. nur das Senden bzw. Empfangen von einfachen Signalen umfassen. Hierbei kann der Datenaustausch verdrahtet oder drathlos mittels gängiger Funktechnik WLAN, Bluetooth, NFC, Mobilfunk etc. ausgeprägt sein kann.

Die Laufzeitumgebung sollte echtzeitfähig ausgebildet sein. Zumindest die erste Instanz sollte den Anforderungen einer Echtzeitkommunikation erfüllen. D.h. das Ablaufen einer solchen Applikation, die Kommunikation und der Datenaustausch laufen in Echtzeit ab.

Die Instanzen der Laufzeitumgebung können so ausgestaltet sein, dass sie eine in einen App-Container eingebettete Applikation ablaufen lassen können.

Die Applikation kann firm- und/oder softwaretechnisch als App oder auch als App-Container ausgeprägt sein. App-Container betten den Softwarecode einer App in einen sicheren Speicherbereich ein, zu dem es dann nur einen ganz geregelten, ggf. verschlüsselten bzw. zertifizierten Zugang von außen gibt. Die Laufzeitumgebung ist insofern mehrschichtig bzw. verteilt ausgestaltet, dass sie mehrere miteinander nahtlos interagierende bzw. kommunizierende bzw. verbindbare bzw. verbundene Instanzen aufweist bzw. bildet bzw. bereitstellt, die jeweils den Architekturebenen zugeordnet werden und damit eine durchlässige nahtlose Kommunikation über die "Grenzen" der Architekturebenen hinweg erlaubt. Mit Instanz kann ein konkretes Objekt, das aus einer "Objektvorlage" gebildet wird - in der objektorientieren Programmierung "Klasse" genannt - bezeichnet werden. Java - bereit vorstehend erwähnt - ist beispielsweise eine objektorientierte Programmiersprache.

Die Hierarchie wird somit aufgeweicht, so dass nicht nur Applikationen oder auch Komponenten mit Komponenten der nächsten angrenzenden Architekturebene, z.B. Applikationen der ersten mit denen der zweiten Architekturebene, kommunizieren können, sondern auch mit Applikationen einer anderen Architekturebene als der angrenzenden, z.B. Applikationen der ersten mit denen zumindest einer weiteren zweiten Applikationsebene, die nicht an die erste angrenzt, interagieren bzw. kommunizieren können bzw. mit diesen verbindbar sind.

Somit kann die Laufzeitumgebung noch zumindest eine weitere Instanz für zumindest eine weitere hierarchisch oberhalb der genannten Architekturebenen angeordnete Architekturebene (z.B. Unternehmensebene und ggf. Cloudanbindung) insbesondere nach dem ISA-95-Standard ausgebildet ist, in der weitere Applikationen ablaufbar und Daten austauschbar sind, wobei bei diese Applikationen mit den vorgenannten Applikation nahtlos miteinander kommunizieren und/oder Daten austauschen können.

Die Daten für den nahtlosen Austausch und/oder für die nahtlose Kommunikation in einem Datenspeicher sind (von außen) zugreifbar ablegbar und/oder abgelegt.
Mit Hilfe des Laufzeitumgebung-internen oder auch externen Datenspeicher können die auf der ersten Instanz wenigstens eine ablaufbare Applikation mit der auf der zweiten Instanz wenigstens eine ablaufbare Applikation nahtlos miteinander kommunizieren und/oder Daten austauschen können. Der Datenspeicher ist vorzugsweise derart ausgebildet, dass er auf die Instanzen verteilt ist.

Eine vorteilhafte Weiterbildung der Erfindung besteht darin, dass die Laufzeitumgebung verteilt als Blockkette (Blockchain) ausgebildet sein kann, wobei die Instanzen die miteinander verketteten Blöcke der Blockkette bilden und die Kommunikation bzw. der Datenaustausch mittels Transaktionen durchführbar ist. Unter einer Blockkette ist hierbei eine kontinuierlich erweiterbare Liste von Datensätzen zu verstehen, "Blöcke" genannt, die mittels kryptographischer Verfahren miteinander verkettet sind. Jeder Block enthält dabei typischerweise einen kryptographisch sicheren Hash (Streuwert) des vorhergehendenden Bocks, einen Zeitstempel und Transaktionsdaten. Die Transaktionsdaten können auch in genannte Smart Contracts eingebettet sein, in denen eine Durchführung einer Transaktion unter den Kommunikationspartnern festgelegt werden. Dies erhöht die Sicherheit.

Ein weiterer Aspekt der Erfindung ist ein Betriebsverfahren für eine Laufzeitumgebung zur Ausführung wenigstens einer anlagentechnischen Applikation und Kopplung mindestens einer anlagentechnischen Komponente in einem die Laufzeitumgebung umfassenden Automatisierungssystem,
welches eine erste Architekturebene ausgeprägt als Feld- und/oder Steuerungsumgebung aufweist, in der eine oder mehrere das Zusammenwirken der jeweils gekoppelten Komponenten zur Ausführung einer vorgegebenen oder vorgebbaren anlagentechnischen Aufgabe steuernde Applikationen ablaufbar sind, und welches zumindest eine zweite Architekturebene ausgeprägt als Prozessleit- und/oder Kommunikationsnetzwerkumgebung aufweist, in der zur Ausführung von vorgegebenen und/oder vorgebbaren anlagentechnischen Prozesse benötigte Applikationen ablaufbar sind und Daten zwischen den Applikationen und/oder zwischen einer Applikation und zumindest einer Kommunikationsnetzwerkschnittstelle austauschbar sind,
dadurch gekennzeichnet, dass die Laufzeitumgebung mehrere miteinander verbindbare und/oder verbundene Instanzen bildet, wobei
- eine solche erste Instanz für die Feld- und/oder Steuerungsumgebung des Automatisierungssystems bereitgestellt wird,
- und wobei zumindest eine solche zweite Instanz für eine Prozessleit- und/oder Kommunikationsnetzwerkumgebung des Automatisierungssystems bereitgestellt wird,
- wobei die auf der ersten Instanz wenigstens eine ablaufbare Applikation mit der auf der zweiten Instanz wenigstens eine ablaufbare Applikation nahtlos miteinander kommunizieren und/oder Daten nahtlos austauschen.

Das Verfahren und Computerprogramm(produkte) können entsprechend der Weiterbildungen/Ausführungsformen der vorliegenden Laufzeitumgebung aus- bzw. weitergebildet sein.

Vorteile der Erfindung sind:
Auf allen Architekturebenen der Automatisierungspyramide kommt dieselbe Laufzeitumgebung zum Einsatz. Diese bietet standardisierte Schnittstellen für die Apps, die darauf ablaufen. Dadurch können einheitliche Mechanismen für die Kommunikation und zum Austausch von Daten genutzt werden, was die Entwicklung und Wartung des Systems deutlich vereinfacht. Durch den gemeinsamen Datenspeicher werden Inkonsistenzen zwischen den verschiedenen Apps vermieden. Insgesamt ergibt sich eine homogene Struktur des Automatisierungssystems, von der Feld- bis hin zur Unternehmensebene hin.

Durch die Unterstützung von Cloud Umgebungen ergibt sich die Möglichkeit, auf einfache Art und Weise moderne Technologien in die Automatisierungslösung zu integrieren, wie z.B. Machine Learning oder die Analyse großer Datenmengen.

Die Möglichkeit, Apps jederzeit während der Laufzeit anzuwenden und sie zu verschieben, bietet eine große Flexibilität, sich an geänderte Umgebungsbedingungen anzupassen.

Des Weiteren wird ein Computerprogramm(produkt) umfassend Programm-Code, der von mindestens einem Prozessor ausgeführt werden kann und der bewirkt, dass der mindestens einen Prozessor das erfindungsgemäße Betriebsverfahren und dessen Ausführungsformen ausführt. Das Computerprogramm kann auf einem Rechner z.B. in der Cloud, Server und/oder PC ablaufen oder als Computerprogrammprodukt auf einem computerlesbaren Medium gespeichert sein. Dabei bringt das Computerprogramm die Laufzeitumgebung zum Ablauf.

Zusätzlich kann eine Variante des Computerprogramm(produkte)s mit Programmbefehlen zur Konfiguration eines Erstellungsgeräts, beispielsweise ein 3D-Drucker, ein Computersystem oder eine zur Erstellung von Prozessoren und/oder Geräten geeignete Herstellungsmaschine sein.

Die Mittel können Hardware-, Firmware und/oder Softwareeinheiten bzw. -module sein.
Unter Bereitstellen kann verstanden werden, dass die Applikation und/oder Fähigkeitspakete selbst den oben genannten Mitteln z.B. in Form einer Verarbeitungseinheit bzw. CPU bzw. einer Kontrolleinheit (Control Unit) bereitgestellt wird. Unter Bereitstellen kann ebenso verstanden werden, dass der Verarbeitungseinheit eine Operation bereitgestellt wird, wobei die Operation die bereitgestellte Applikation selbst sein kann und/oder die Fähigkeitspakete zur Steuerung und/oder Ausführung der Konfiguration verwendet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigt in schematischer Darstellung:
- Figur 1: die eingangs erwähnte Automatisierungspyramide nach ISA-95,
- Figur 2: schematisch ein Automatisierungssystem mit drei Architekturebenen.

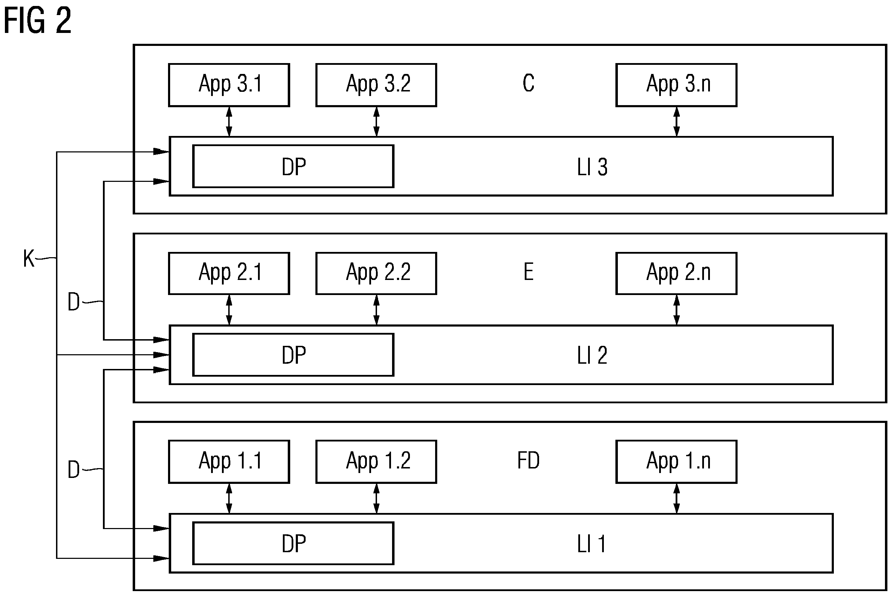

Figur 2 zeigt ein Automatisierungssystem mit drei Architekturebenen. Hierbei ist die Architekturebene 1 mit FD gekennzeichnet. Die in Figur 2 gekennzeichnete Ebene E entspricht einer Linienkontrollebene und inkludiert die Architekturebenen 2 und 3 der eingangserläuterten Pyramide. Die mit "C" gekennzeichnete Ebene entspricht der Architekturebene 4 mit einer oder mehrere Anbindungen an eine Cloud, die Clouddienste liefern kann.

Viele verschiedene Arten von Apps App 1.1. bis App 1.n, App 2.1 bis App 2.n und App 3.1 bis App 3.n können zum Einsatz kommen. Beispiele hierfür sind:
- Apps zur Steuerung der Produktion z. B. App 1.1 bis App 1.n, die mit IEC 61131 Programmiersprachen programmiert werden (sogenannte Soft-PLCs)
- Apps zum Bedienen und Beobachten von Maschinen (HMI= Human Man Interface)
- Anwendungen zur Optimierung der unterlagerten Produktion (z.B. bezüglich Durchsatz, Qualität, ...) z.B. App 1.3.
- Apps für Kommunikationsschnitten z.B. App 1.2. (z.B. PROFINET, CAN, ...)
- Kundenspezifische Anwendungen, die vom Endkunden oder von Zulieferern beigesteuert werden. Solche Kundenspezifischen Applikationen z.B. App 1.1. können z.B. Maschinensteuerung für eine Getränkeabfüllanlage sein, die mittels Prozessindikatoren (KPIs), die aus Produktionsaufträgen auf der nächsthöheren Ebenen z.B. mit App 2.2 berechnet werden, gelenkt werden.
- Des Weiteren sind Apps z.B. App 3.1 möglich, die z.B. einen Clouddienst mit Berechnungen mit Hilfe einer Künstlichen Intelligenz bieten. Auch können beispielsweise mittels einer App 3.2. Cloudüberwachungsdienste angeboten werden.

Erfindungsgemäß wird ein Laufzeitumgebung auf allen Ebenen eingesetzt, die eine einheitlichen Kommunikation K und durchgängigen Datenaustausch D ermöglicht. Auf den verschiedenen Architekturebenen des Automatisierungssystems läuft jeweils eine eigene Instanz der Laufzeitumgebung. Alle Instanzen sind miteinander verbunden durch eine Kommunikations- und eine Datenverbindung. Somit können alle Ebenen miteinander in gleichartiger Weise kommunizieren und Daten austauschen. Auf diese Weise können auch die Apps der verschiedenen Ebenen miteinander kommunizieren und Daten austauschen.
Mit Hilfe eines Datenspeichers DP bzw. Datenbank, welche verteilt auf die genannten Ebenen realisiert sein kann, können die genannten untereinander Daten austauschen und somit ihre Datenhaltung konsistent halten.

Die Laufzeitumgebung weist im Beispiel (Laufzeiumgebungs-)instanzen LI 1 bis LI 3 auf oder es können diese von ihr erzeugt, gebildet bzw. bereitgestellt werden. Im Beispiel ist die Instanz LI 1 der Ebenen FD, die Instanz LI 2 der Ebene E und die Instanz LI 3 der Ebene C zugeordnet bzw. für diese eingerichtet.

Die Laufzeitumgebung umfasst eine Auflaufumgebung für App-Container. Die einzelnen Apps selbst laufen in App-Containern. Dies macht sie unabhängig von der unterlagerten Hardware und dem Betriebssystem. Die Laufzeitumgebung kann somit in verschiedensten Ablaufumgebungen zum Einsatz kommen. Cloud Umgebungen werden genauso unterstützt wie klassische PCs.

Durch den Ablauf der Apps in App-Containern ergibt sich ein weiterer Vorteil. Apps können sehr einfach während der Laufzeit des Automatisierungssystems appliziert und gestartet werden. Ergeben sich während der Laufzeit Engpässe in der Rechenleistung, so kann eine App jederzeit auf einen anderen Rechner bzw. PC verlegt und dort zur Ausführung gebracht werden.

Die Laufzeitumgebung kann verteilt als Blockkette (Blockchain) implementiert sein, wobei die Instanzen die miteinander verketteten Blöcke der Blockkette bilden und die Kommunikation bzw. der Datenaustausch mittels Transaktionen durchführbar ist.

Eine Möglichkeit, wie eine virtuelle Maschine (VM) mit einer Blockkette implementiert sein kann, ist aus EP 17183586.1 bekannt. So eine virtuelle Maschine kann in Richtung der erfindungsgemäßen Laufzeitumgebung ausgestaltet werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Laufzeitumgebung oder Betriebsverfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Verfahrensschritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.
Die Instruktionen können in lokalen oder zentralen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Laufzeitumgebung zur Ausführung wenigstens einer anlagentechnischen Applikation und Kopplung mindestens einer anlagentechnischen Komponente in einem die Laufzeitumgebung umfassenden Automatisierungssystem,
welches eine erste Architekturebene (FD) ausgeprägt als Feld- und/oder Steuerungsumgebung aufweist, in der eine oder mehrere das Zusammenwirken der jeweils gekoppelten Komponenten zur Ausführung einer vorgegebenen oder vorgebbaren anlagentechnischen Aufgabe steuernde Applikationen (App 1.1 bis App 1.n) ablaufbar sind,
und welches zumindest eine zweite Architekturebene (E) ausgeprägt als Prozessleit- und/oder Kommunikationsnetzwerkumgebung aufweist, in der zur Ausführung von vorgegebenen und/oder vorgebbaren anlagentechnischen Prozesse benötigte Applikationen ablaufbar sind und Daten zwischen den Applikationen (App 2.1 bis App 2.n) und/oder zwischen einer Applikation und zumindest einer Kommunikationsnetzwerkschnittstelle austauschbar sind, **dadurch gekennzeichnet, dass** die Laufzeitumgebung mehrere miteinander verbindbare und/oder verbundene Instanzen aufweist oder bilden kann, wobei
- eine solche erste Instanz (LI1) für die Feld- und/oder Steuerungsumgebung ausgebildet ist,
- und wobei eine solche zumindest zweite Instanz (LI2) für die Prozessleit- und/oder Kommunikationsnetzwerkumgebung des Automatisierungssystems ausgebildet ist,
- wobei die auf der ersten Instanz wenigstens eine ablaufbare Applikation mit der auf der zweiten Instanz wenigstens eine ablaufbare Applikation nahtlos miteinander kommunizieren und/oder Daten (D) nahtlos austauschen können.

2. Laufzeitumgebung nach dem vorhergehenden Anspruch, **dadurch gekennzeichnet, dass** zumindest eine weitere Instanz (LI3) für zumindest eine weitere hierarchisch oberhalb der genannten Architekturebenen (FD, E) angeordnete Architekturebene (C) insbesondere nach dem ISA-95-Standard ausgebildet ist, in der weitere Applikationen (App 3.1 bis App 3.n) ablaufbar und Daten austauschbar sind, wobei diese Applikationen mit den vorgenannten Applikation nahtlos miteinander kommunizieren und/oder Daten austauschen können.

3. Laufzeitumgebung nach einem der vorhergehenden Ansprüche, **dadurch gekennzeichnet**, die Daten für den nahtlosen Austausch und/oder für die nahtlose Kommunikation (K) in einem Datenspeicher (DP) zugreifbar ablegbar und/oder abgelegt sind.

4. Laufzeitumgebung nach einem der vorhergehenden Ansprüche, **dadurch gekennzeichnet, dass** der Datenspeicher derart ausgebildet ist, dass er auf die Instanzen verteilt ist.

5. Laufzeitumgebung nach einem der vorhergehenden Ansprüche, **dadurch gekennzeichnet, dass** die Laufzeitumgebung echtzeitfähig ausgestaltet ist.

6. Laufzeitumgebung nach einem der vorhergehenden Ansprüche, **dadurch gekennzeichnet, dass** die Instanzen der Laufzeitumgebung dazu eingerichtet sind, eine in einen App-Container eingebettete Applikation ablaufen zu lassen.

7. Laufzeitumgebung nach einem der vorhergehenden Ansprüche, **dadurch gekennzeichnet, dass** die Laufzeitumgebung verteilt als Blockkette ausgebildet sein kann, wobei die Instanzen die miteinander verketteten Blöcke der Blockkette bilden und die Kommunikation bzw. der Datenaustausch mittels Transaktionen durchführbar ist.

8. Betriebsverfahren für eine Laufzeitumgebung zur Ausführung wenigstens einer anlagentechnischen Applikation und Kopplung mindestens einer anlagentechnischen Komponente in einem die Laufzeitumgebung umfassenden Automatisierungssystem, welches eine erste Architekturebene (FD) ausgeprägt als Feld- und/oder Steuerungsumgebung aufweist, in der eine oder mehrere das Zusammenwirken der jeweils gekoppelten Komponenten zur Ausführung einer vorgegebenen oder vorgebbaren anlagentechnischen Aufgabe steuernde Applikationen (App 1.1 bis App 1.n) ablaufbar sind,
und welches zumindest eine zweite Architekturebene € ausgeprägt als Prozessleit- und/oder Kommunikationsnetzwerkumgebung aufweist, in der zur Ausführung von vorgegebenen und/oder vorgebbaren anlagentechnischen Prozesse benötigte Applikationen ablaufbar sind und Daten zwischen den Applikationen (App 2.1 bis App 2.n) und/oder zwischen einer Applikation und zumindest einer Kommunikationsnetzwerkschnittstelle austauschbar sind,
**dadurch gekennzeichnet, dass** die Laufzeitumgebung mehrere miteinander verbindbare und/oder verbundene Instanzen bildet, wobei
- eine solche erste Instanz (LI1) für die Feld- und/oder Steuerungsumgebung des Automatisierungssystems bereitgestellt wird,
- und wobei zumindest eine solche zweite Instanz (LI2) für eine Prozessleit- und/oder Kommunikationsnetzwerkumgebung des Automatisierungssystems bereitgestellt wird,
- wobei die auf der ersten Instanz wenigstens eine ablaufbare Applikation mit der auf der zweiten Instanz wenigstens eine ablaufbare Applikation nahtlos miteinander kommunizieren und/oder Daten (D) nahtlos austauschen.

9. Betriebsverfahren nach dem vorhergehenden Anspruch, **dadurch gekennzeichnet, dass** zumindest eine weitere Instanz für zumindest eine weitere hierarchisch oberhalb der genannten Architekturebenen angeordnete Architekturebene (C) insbesondere nach dem ISA-95-Standard ausgebildet ist, in der weitere Applikationen (App 3.1 bis App 3.n) ablaufbar und Daten austauschbar sind, wobei bei diese Applikationen mit den vorgenannten Applikation nahtlos miteinander kommunizieren und/oder Daten austauschen können.

10. Betriebsverfahren nach einem der vorhergehenden Betriebsverfahrensansprüchen, **dadurch gekennzeichnet**, die Daten für den nahtlosen Austausch und/oder für die nahtlose Kommunikation (K) in einem Datenspeicher (DP) zugreifbar abgelegt werden.

11. Betriebsverfahren nach einem der vorhergehenden Betriebsverfahrensansprüchen, **dadurch gekennzeichnet, dass** der Datenspeicher derart ausgebildet ist, dass er auf die Instanzen verteilt ist.

12. Betriebsverfahren nach einem der vorhergehenden Betriebsverfahrensansprüchen, **dadurch gekennzeichnet, dass** die Instanzen der Laufzeitumgebung eine in einen App-Container eingebettete Applikation ablaufen lassen.

13. Betriebsverfahren nach einem der vorhergehenden Betriebsverfahrensansprüchen, **dadurch gekennzeichnet, dass** die Laufzeitumgebung echtzeitfähig ist.

14. Betriebsverfahren nach einem der vorhergehenden Betriebsverfahrensansprüchen, **dadurch gekennzeichnet, dass** die Laufzeitumgebung verteilt als Blockkette in Betrieb ist, wobei die Instanzen die miteinander verketteten Blöcke der Blockkette bilden und die Kommunikation bzw. der Datenaustausch mittels Transaktionen durchgeführt wird.

15. Computerprogrammprodukt umfassend Programm-Code, der von mindestens einem Prozessor ausgeführt werden kann und der bewirkt, dass der mindestens eine Prozessor das Betriebsverfahren nach einem der vorhergehenden Betriebsverfahrensansprüche ausführt.
